(19) Europäisches Patentamt
European Patent Office
Office européen des brevets

(11) **EP 3 741 020 B1**

(12) **EUROPÄISCHE PATENTSCHRIFT**

(45) Veröffentlichungstag und Bekanntmachung des Hinweises auf die Patenterteilung:
**18.10.2023 Patentblatt 2023/42**

(21) Anmeldenummer: **18807984.2**

(22) Anmeldetag: **23.11.2018**

(51) Internationale Patentklassifikation (IPC):
*H02J 1/10* (2006.01)       *B60R 16/03* (2006.01)
*H02J 9/00* (2006.01)

(52) Gemeinsame Patentklassifikation (CPC):
**H02J 1/10; B60R 16/03; H02J 9/005;**
H02J 2310/46; Y02T 10/92

(86) Internationale Anmeldenummer:
**PCT/EP2018/082349**

(87) Internationale Veröffentlichungsnummer:
**WO 2019/141418 (25.07.2019 Gazette 2019/30)**

(54) **ELEKTRISCHE SCHALTUNG ZUR VERSORGUNG EINES VERBRAUCHERS AUS VERSCHIEDENEN SPANNUNGSQUELLEN**

ELECTRICAL CIRCUIT FOR SUPPLYING A CONSUMER FROM DIFFERENT POWER SOURCES

CIRCUIT ÉLECTRIQUE POUR ALIMENTER UN CONSOMMATEUR À PARTIR DE DIFFÉRENTES SOURCES DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.01.2018 DE 102018200716**

(43) Veröffentlichungstag der Anmeldung:
**25.11.2020 Patentblatt 2020/48**

(73) Patentinhaber: **Robert Bosch GmbH**
**70442 Stuttgart (DE)**

(72) Erfinder: **HERMANN, Carsten**
**72762 Reutlingen (DE)**

(56) Entgegenhaltungen:
**EP-A1- 2 180 392            EP-A2- 1 128 536**
**DE-A1- 19 651 612          DE-A1-102014 203 968**
**US-A- 5 798 976             US-A1- 2010 097 044**
**US-A1- 2014 139 029**

**Beschreibung**

Die vorliegende Erfindung betrifft eine elektrische Schaltung zur Versorgung eines Verbrauchers aus verschiedenen Spannungsquellen mit einer ersten Teilschaltung für den Standby-Betrieb des Verbrauchers und einer zweiten Teilschaltung für den Normalbetrieb des Verbrauchers.

Stand der Technik

Eine anwendungsspezifische integrierte Schaltung in einem Steuergerät eines Kraftfahrzeuges muss mit Spannung versorgt werden. Dabei kann eine Spannungsversorgung beispielsweise aus der Fahrzeugbatterie erfolgen, wobei insbesondere eine Spannungsaufnahme über Klemme 30, vor oder hinter dem Hauptrelais, erfolgt. Es kann jedoch auch vorteilhaft sein, die Spannungsversorgung aus einer im Steuergerät vorhanden Spannungsquelle mit geringerer Spannung als der Batteriespannung zu entnehmen, um die Verlustleistung der anwendungsspezifischen integrierten Schaltung zu reduzieren. Dazu kommt beispielsweise die Vorregelspannung eines Schaltreglers infrage, sobald diese nach dem Hochlauf des Steuergerätes zur Verfügung steht. Um den Hochlauf zum Beispiel über Klemme 15 o.ä. zu initiieren, muss das ASIC in der Lage sein, sich auch aus solchen Quellen versorgen zu können. Derartige Spannungsquellen können die ersten beziehungsweise die einzigen zur Verfügung stehenden Spannungsquellen sein, sodass die anwendungsspezifische integrierte Schaltung in der Lage sein muss, sich auch aus diesen Quellen versorgen zu können.

Da während des Startvorgangs eines Verbrennungsmotors in einem Kraftfahrzeug die Spannung der Fahrzeugbatterie stark einbrechen kann, kann gefordert sein, dass sich die anwendungsspezifische integrierte Schaltung zur Aufrechthaltung ihrer Verfügbarkeit auch zeitweise aus der Ausgangsspannung eines DC-DC-Aufwärtswandlers versorgen kann, sofern diese im Steuergerät zur Verfügung steht.

Bei einem abgestellten Fahrzeug befinden sich die Steuergeräte und die darin verbauten anwendungsspezifischen integrierten Schaltungen in der Regel in einem Standby-Mode, in welchem oft nur sehr geringe Ströme im μA-Bereich zur Aufrechterhaltung einiger weniger Grundfunktionen zur Verfügung stehen, sodass in diesem Betriebszustand der Versorgungsstrom über einen gesonderten Anschluss aus Klemme 30, vor dem Hauptrelais, bezogen werden kann.

Aufgrund der zu unterschiedlichen Zeitpunkten zur Verfügung stehenden Spannungsquellen und den verschiedenen Betriebszuständen der anwendungsspezifischen integrierten Schaltung ist es erforderlich, dass die benötigten Betriebsspannungen auch aus verschiedenen Quellen über verschiedene Anschlüsse gewonnen werden können.

Der Stand der Technik schlägt dazu in einem ersten einfachen Ansatz vor, dass die verschiedenen zur Verfügung stehenden Spannungsquellen über Dioden auf einen gemeinsamen Sternpunkt geführt werden können. Dies hat jedoch den Nachteil, dass die Spannung dieses Sternpunktes immer um eine Dioden-Flussspannung unterhalb der höchsten zur Verfügung stehenden Spannungsquelle liegt. Da Steuergeräte bei einem Einbruch der Spannung der Fahrzeugbatterie, beispielsweise bedingt durch den Startvorgang eines Fahrzeuges, bis beispielsweise 4 V funktionieren müssen, ist dieser einfache Ansatz aufgrund der dann zu geringen im ASIC zur Verfügung stehenden Spannung eher ungeeignet. Ein weiterer Nachteil ergibt sich aus der in den Dioden umgesetzten Verlustleistung.

Des Weiteren ist es im Stand der Technik eine gängige Praxis, anstelle der Dioden Schalter in Form von MOS-Transistoren zu verwenden, um die Verfügbarkeit auch bei geringer Spannung der Fahrzeugbatterie zu gewährleisten. Die Spannung vor und hinter dem Schalter wird erfasst und anschließend die sehr kleine Spannungsdifferenz dieser beiden Spannungen von einem Komparator ausgewertet, um daraus das Ansteuersignal für den Schalter abzuleiten. Hier ist jedoch die endliche Umschaltzeit der Schalter und die zeitliche Verzögerung des Komparators zu berücksichtigen, welche dazu führen kann, dass die Versorgung für die anwendungsspezifische integrierte Schaltung kurzzeitig unterbrochen wird oder dass verschiedene Quellen über überlappend gleichzeitig eingeschaltete MOS-Transistoren miteinander kurzgeschlossen werden.

Es ist daher notwendig, dass das Umschalten zwischen den einzelnen Versorgungsquellen schnell erfolgt, damit keine Unterspannung in der anwendungsspezifischen integrierten Schaltung auftreten kann und damit keine Kurzschlüsse zwischen den versorgenden Quellen entstehen können.

Die EP 2 180 392 A1 offenbart eine elektrische Spannungsversorgung, welche eine Regelschaltung umfasst, mit der aus mehreren Spannungsquellen eine Ausgangsspannung an Ausgangsanschlüssen erzeugt wird.

Die EP 1 128 536 A2 offenbart eine Vorrichtung zur Ein- und Ausschaltung eines Steuergerätes, mittels welcher erreicht wird, dass im ausgeschalteten Zustand weder die Logikeinheit noch ein Steuergerät Strom aus Bordnetzen aufnimmt.

Die US 2010/0097044 A1 offenbart ein Verfahren zum Optimieren des Betriebswirkungsgrades von mehreren Stromversorgungen, die zur Versorgung eines Systems vorgesehen sind, wobei die Stromversorgungen selektiv in einem Aktiv- oder Standby-Modus betreibbar sind.

Die US 2014/0139029 A1 offenbart einen Regler mit zwei Eingängen und einem einzigen Ausgang, welcher ein geregeltes Stromversorgungssignal auf Grundlage eines ermittelten Zwischenversorgungssignals liefert.

Die 5,798,976 A betrifft eine Halbleiter-Speichervorrichtung mit einem reduzierten Stromverbrauch in einem Datenhaltemodus.

Die DE 10 2014 203 968 A1 offenbart ein Steuergerät für ein Mehrspannungsbordnetz eines Fahrzeugs, welches einen zuverlässigeren Betrieb eines Mehrspannungsbordnetzes eines Fahrzeuges gewährleisten soll.

Die DE 196 51 612 A1 offenbart eine elektronische Schaltung zur Spannungsversorgung für ein elektronisches Bauelement, bei welcher wenigstens zwei Stromkreise vorhanden sind, die zur Bereitstellung der Spannungsversorgung ausgewählt werden können.

Offenbarung der Erfindung

Erfindungsgemäß wird eine elektrische Schaltung zur Versorgung eines Verbrauchers aus verschiedenen Spannungsquellen gemäß Patentanspruch 1 zur Verfügung gestellt.

Dabei versorgt sich die Gesamtschaltung aus verschiedenen Spannungsquellen (beispielsweise Klemme 30 vor dem Hauptrelais, Klemme 30 nach dem Hauptrelais, Klemme 15 oder einer im Steuergerät erzeugten Vorregelspannung) in einem Normal- und in einem Standby-Betrieb und ermöglicht auf diese Weise eine beliebige Erweiterung der Anzahl der Spannungsquellen. Die erste Teilschaltung ist für die Versorgung des Verbrauchers, insbesondere einer anwendungsspezifischen integrierten Schaltung, im Standby-Betrieb vorgesehen, wobei die andere Teilschaltung hingegen im Normalbetrieb zusätzlich zur ersten Teil-Schaltung aktiviert wird.

Da es während des Runterlaufs der anwendungsspezifischen integrierten Schaltung erforderlich sein kann, Kontrollfunktionen aufrecht zu erhalten, solange noch Spannung an bestimmten Anschlüssen anliegt (zum Beispiel Spannungen in Kondensatoren von Ladungspumpen oder in Bootstrap-Kondensatoren), um beispielsweise unbeabsichtigtes Einschalten von Leistungsendstufen zu verhindern, ist es erfindungsgemäß vorgesehen, die anwendungsspezifische integrierte Schaltung oder Teile derselben im Runterlauf auch aus diesen Quellen zu versorgen.

Vorteile der Erfindung

Die erfindungsgemäße elektrische Schaltung hat den Vorteil, dass prinzipiell eine Anwendbarkeit für sämtliche Szenarien gegeben ist, in denen eine Versorgung aus verschiedenen Spannungsquellen möglich sein muss.

Zudem besteht im Vergleich zum Stand der Technik der Vorteil, dass kein hartes Umschalten zwischen den Spannungsquellen mehr stattfindet. Zudem wird auch kein Komparator mehr benötigt. Spannungseinbrüche und Kurzschlüsse zwischen den versorgenden Spannungsquellen, die beim Umschalten zwischen den Quellen in klassischen Ansätzen entstehen können, werden ebenfalls vermieden.

Das Problem einer relevanten Rückspeisung von einer Spannungsquelle auf eine andere Spannungsquelle kann erfindungsgemäß ebenfalls vermieden werden.

Des Weiteren sind die Übergänge der Versorgung aus den verschiedenen Spannungsquellen fließend, da Einbrüche einer Spannungsquelle von einer anderen Spannungsquelle abgefangen werden können.

Ferner ist es möglich, jede Spannungsquelle für die Versorgung je nach Betriebszustand der anwendungsspezifischen intergierten Schaltung separat freizugeben beziehungsweise zu sperren.

Der vorliegenden Erfindung liegt prinzipiell die Idee zugrunde, die verschiedenen verfügbaren Spannungsquellen über MOS-Transistoren auf einen gemeinsamen Sternpunkt zu führen, wobei die MOS-Transistoren nicht als Schalter arbeiten. Optional ist eine Stützung des Sternpunktes mit einem Ladungsspeicher (Kondensator) vorgesehen. Durch diesen Aufbau wird erreicht, dass sich - ähnlich wie in klassischen Ansätzen mit MOS-Transistoren als Schalter - nur ein geringer Spannungsabfall über den MOS-Transistoren ergibt und daher die Spannung des Sternpunktes knapp unterhalb der Spannung derjenigen Spannungsquelle liegen kann, welche den höchsten Spannungswert aufweist.

Dabei kommen PMOS-Transistoren zum Einsatz, bei welchen die Source-Gate-Spannung nahe der Schwellspannung eingestellt wird. Die Transistoren arbeiten im Bereich der schwachen Inversion (weak-inversion, sub-threshold region). Wird die Drain-Spannung eines PMOS-Transistors über die Source-Spannung gehoben ($U_D$ > Us), so tauschen Drain und Source die Funktion und ein Rückwärtsbetrieb des MOS-Transistors erfolgt. Aufgrund der dann positiven Drain-Source-Spannung von einigen 10 mV bis einigen 100 mV ergibt sich eine Drain-Gate-Spannung, welche ausreicht, um einen Kanal zu bilden. Der Transistor ist dabei im Gegensatz zu klassischen Ansätzen nur soweit aufgesteuert, wie es zur Bereitstellung des benötigten Stromes erforderlich ist.

Erfindungsgemäß werden zwei Teilschaltungen vorgeschlagen, welche jeweils entweder den Strom durch den PMOS-Transistor oder die sich ergebende Drain-Source-Spannung erfassen und bei einem höheren Stromfluss beziehungsweise bei einem aufgrund des höheren Stromflusses bedingten höheren Spannungsabfall über der Drain-Source-Strecke die Drain-Gate-Spannung des rückwärts betriebenen PMOS-Transistors erhöhen, sodass sich über einen gewissen Drain-Source-Strombereich nur ein geringer Spannungsabfall über der Drain-Source-Strecke des PMOS-Transistors ergibt. Sollte die versorgende Spannungsquelle unter den Wert einer anderen zur Verfügung stehenden Spannungsquelle sinken, so wird die Drain-Gate-Spannung des entsprechenden PMOS-Transistors sofort auf den Wert der Schwellspannung oder unterhalb dieser zurückgestellt. Der PMOS-Transistor arbeitet dann im normalen Betriebsmodus mit einer über der Drain-Spannung liegenden Source-Spannung, $U_S > U_D$, als Stromquelle mit einem sehr geringen Rückspeisestrom, welcher bei geeigneter Dimensionierung im nA-Bereich liegt.

In einer bevorzugten Ausführungsform der Erfindung ist vorgesehen, dass die erste Teilschaltung für jede der verschiedenen Spannungsquellen eine untergeordnete Teilschaltung umfasst. Auf diese Weise ist es möglich, dass für den Standby-Betrieb des Verbrauchers mehrere verschiedene Spannungsquellen zur Versorgung berücksichtigt werden können.

Vorteilhafterweise sind die jeweils vorgesehenen untergeordneten Teilschaltungen zur Versorgung eines eine Ausgangsspannung bereitstellenden ersten Sternpunktes aus den verschiedenen Spannungsquellen in diesem miteinander verbunden. Auf diese Weise wird erreicht, dass sich für den Standby-Betrieb nur ein geringer Spannungsabfall über den vorgesehenen Transistoren ergibt, sodass die Spannung des Sternpunktes knapp unterhalb der Spannung der Quelle liegen kann, welche den höchsten Spannungswert aufweist.

Gemäß einer weiteren zweckmäßigen Ausgestaltung der Erfindung umfasst die zweite Teilschaltung für jede der verschiedenen Spannungsquellen eine untergeordnete Teilschaltung. Dadurch können für den Normalbetrieb des Verbrauchers mehrere verschiedene Spannungsquellen zur Versorgung berücksichtigt werden.

Besonders bevorzugt sind die jeweils vorgesehenen untergeordnetenTeilschaltungen zur Versorgung eines eine Ausgangsspannung bereitstellenden geregelten zweiten Sternpunktes aus den verschiedenen Spannungsquellen in diesem miteinander verbunden.

Gemäß einer weiteren vorteilhaften Variante der Erfindung dient der erste Sternpunkt als Versorgungsspannung eines Operationsverstärkers. Der Ausgang des Operationsverstärkers stellt eine Steuerspannung zur Verfügung, die mit einem Eingang der zweiten übergeordneten Teilschaltung verbunden ist. Mit dieser Steuerspannung ist es möglich, den zweiten Sternpunkt auf einen bestimmten Spannungswert zu regeln beziehungsweise einzustellen. Durch die Versorgung des Operationsverstärkers aus dem ersten Sternpunkt kann erreicht werden, dass die für die zweite Teilschaltung für den Normalbetrieb verwendeten NMOS-Transistoren innerhalb auch bei niedriger Spannung der Fahrzeugbatterie aufgesteuert werden können. Somit kann auch im Normalfall ein geringer Spannungsabfall über den vorgesehenen Transistoren erzielt werden.

Vorteilhafterweise ist aus dem ersten Sternpunkt ein Linearregler versorgbar, der eine geregelte erste Betriebsspannung für den Verbraucher zur Verfügung stellt.

Bevorzugter Weise umfasst jede der für die erste übergeordnete Teilschaltung vorgesehenen untergeordneten Teilschaltungen Anschlüsse für eine Spannungsquelle, eine Stromquelle einen Referenzstrom und einen die Ausgangsspannung des ersten Sternpunktes bereitstellenden Anschluss.

Weiter bevorzugt umfasst jede der für die zweite übergeordnete Teilschaltung vorgesehenen untergeordneten Teilschaltungen Anschlüsse für eine Spannungsquelle, eine Stromquelle, Referenzströme und einen die Ausgangsspannung des zweiten Sternpunktes bereitstellenden Anschluss.

Erfindungsgemäß verbinden in den untergeordneten Teilschaltungen PMOS-Transistoren die an die untergeordneten Teilschaltungen angeschlossenen Spannungsquellen mit den Sternpunkten, wobei die PMOS-Transistoren rückwärts betrieben sein können.

In einer weiteren bevorzugten Ausgestaltung der Erfindung erfolgt eine Erfassung des Stromes durch die die Spannungsquellen mit den Sternpunkten verbindenden PMOS-Transistoren.

Weiter besonders bevorzugt wird jeweils entweder der Strom durch den PMOS-Transistor oder die sich ergebende Drain-Source-Spannung erfasst. Bei einem höheren/niedrigeren Stromfluss beziehungsweise bei einem aufgrund des Stromflusses bedingten höheren/niedrigeren Spannungsabfall über der Drain-Source-Strecke wird die Drain-Gate-Spannung des rückwärts betriebenen PMOS-Transistors erhöht/erniedrigt, sodass sich über einen gewissen Drain-Source-Strombereich nur ein geringer Spannungsabfall über der Drain-Source-Strecke des PMOS-Transistors ergibt.

Vorzugsweise erfolgt eine Erfassung des Spannungsabfalls über der Drain-Source-Strecke der die Spannungsquellen mit den Sternpunkten verbindenden PMOS-Transistoren.

Besonders bevorzugt wird bei einem entsprechenden Spannungsabfall über der Drain-Source-Strecke eines der PMOS-Transistoren die Drain-Gate-Spannung des rückwärts betriebenen PMOS-Transistors beziehungsweise die Source-Gate-Spannung des PMOS-Transistors so eingestellt, dass sich über einen gewissen Drain-Source-Strombereich des PMOS-Transistors nur ein geringer Spannungsabfall über der Drain-Source-Strecke des PMOS-Transistors ergibt.

Weiter bevorzugt können über Steuerströme einzelne Spannungsquellen für die Versorgung der Sternpunkte freigegeben beziehungsweise gesperrt werden.

Vorteilhafte Weiterbildungen der Erfindung sind in den Unteransprüchen angegeben und in der Beschreibung beschrieben.

Zeichnungen

Ausführungsbeispiele der Erfindung werden anhand der Zeichnungen und der nachfolgenden Beschreibung näher erläutert. Es zeigen:

Figur 1 ein Ausführungsbeispiel einer untergeordneten Teilschaltung für eine erste für den Standby-Betrieb eines Verbrauchers vorgesehene Teilschaltung,

Figur 2 ein Ausführungsbeispiel einer ersten übergeordneten Teilschaltung für den Standby-Betrieb eines Verbrauchers,

Figur 3 ein Ausführungsbeispiel einer untergeordneten Teilschaltung für eine zweite für den Normalbetrieb eines Verbrauchers vorgesehene Teilschaltung,

Figur 4 ein Ausführungsbeispiel einer zweiten übergeordneten Teilschaltung für den Normalbetrieb eines Verbrauchers, und

Figur 5 ein Ausführungsbeispiel einer elektrischen Schaltung zur Versorgung eines Verbrauchers aus verschiedenen Spannungsquellen mit einer ersten Teilschaltung für den Standby-Betrieb und einer zweiten Teilschaltung für den Normalbetrieb eines Verbrauchers.

Ausführungsformen der Erfindung

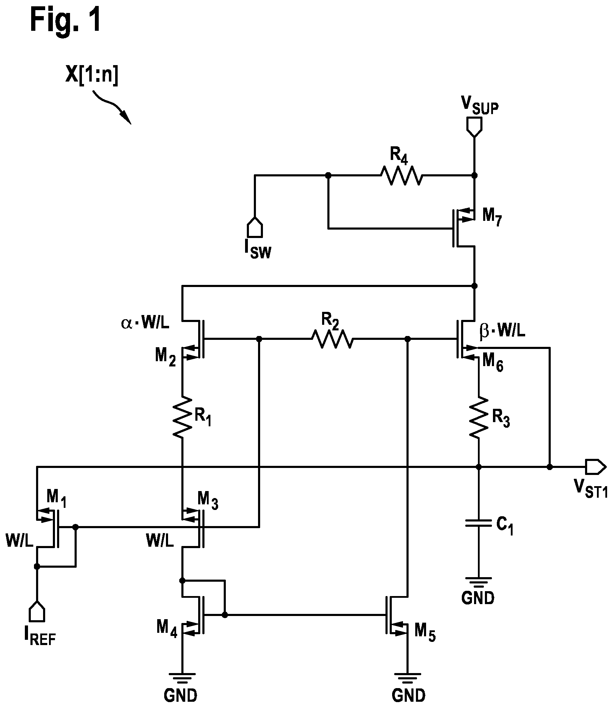

In Figur 1 ist ein Ausführungsbeispiel einer untergeordneten Teilschaltung $X_1$, $X_2$, $X_n$ für eine erste für den Standby-Betrieb eines Verbrauchers vorgesehene übergeordnete Teilschaltung X gezeigt, welche einen PMOS-Transistor $M_6$ und weitere Komponenten zur Ansteuerung des Transistors $M_6$ aufweist. Dabei wird über den Anschluss $I_{REF}$ ein Referenzstrom zugeführt, welcher im Bereich einiger 10 nA bis einiger 100 nA liegen kann. Der Transistor M, ist vorzugsweise so zu dimensionieren, dass seine Source-Gate-Spannung nahe der Schwellspannung eingestellt wird, sodass der Transistor $M_1$ in schwacher Inversion (weak-inversion, sub-threshold region) betrieben wird.

Sofern kein Strom durch $M_6$ fließt, liegt auch seine Source-Gate-Spannung nahe der Schwellspannung. Der Transistor $M_6$ kann eine größere oder kleinere Weite als $M_1$ haben, was vorliegend durch den Koeffizienten β ausgedrückt ist. Fließt nun ein Strom von Anschluss $V_{sup}$ über die Transistoren $M_7$, $M_6$ und den Widerstand $R_3$ zum Anschluss $V_{ST1}$, so wird die Drain-Spannung von $M_6$ über die Spannung seines Source-Anschlusses gehoben, sodass Drain und Source ihre Funktion tauschen und der Transistor $M_6$ rückwärts betrieben wird. Durch die positive Drain-Source-Spannung von $M_6$ ergibt sich auch eine Drain-Gate-Spannung, welche ausreichen kann, sodass $M_6$ einen Kanal bildet und den benötigten Strom bereitstellen kann.

Damit ein Strom über die Transistoren $M_7$, $M_6$ und den Widerstand $R_3$ fließen kann, ist es erforderlich, dass der Transistor $M_7$ aufgesteuert wird, indem ein Steuerstrom aus dem Anschluss $I_{SW}$ entnommen wird, sodass sich über dem Widerstand $R_4$ ein Spannungsabfall ergibt, der größer als die Schwellspannung von $M_7$ ist. Der Transistor $M_7$, der Widerstand $R_4$ und der $I_{SW}$-Anschluss sind daher nur erforderlich, wenn die Versorgung des Sternpunktes $V_{ST1}$ aus dem Anschluss $V_{sup}$ abschaltbar ausgeführt werden soll. Ist eine permanente Versorgung des Sternpunktes $V_{ST1}$ aus $V_{SUP}$ vorgesehen, so kann der Anschluss $V_{SUP}$ direkt mit dem Drain von $M_6$ verbunden werden und die Komponenten $M_7$, $R_4$ sowie der Anschluss Isw für den Steuerstrom können entfallen.

Würde ein zu großer Strom über die Drain-Source-Strecke von $M_6$ fließen, so könnte die Drain-Source-Spannung so groß werden, dass seine Drain-Bulk-Diode aufgesteuert würde. Um dem entgegenzuwirken, wird die Drain-Gate-Spannung von $M_6$ mit steigendem Drain-Source-Strom ebenfalls erhöht. Dazu wird der Strom, der durch $M_6$ fließt, mithilfe des Transistors $M_2$ erfasst. Die Transistoren $M_6$ und $M_2$ können unterschiedliche Weiten haben. Dies ist durch die Koeffizienten α und β in Figur 1 gekennzeichnet. Fließt kein Strom durch den Widerstand $R_2$, so haben $M_2$ und $M_6$ die gleiche Drain-Gate-Spannung. Bei geeigneter Dimensionierung von $M_6$, $M_2$, $R_1$ und $M_3$ kann so ein Strom in den aus den Transistoren $M_4$ und $M_6$ gebildeten Stromspiegel fließen, welcher einem Bruchteil des Stromes entspricht, der durch $M_6$ läuft. Dieser Strom ruft an dem Widerstand $R_2$ einen Spannungsabfall hervor, sodass die Drain-Gate-Spannung von Me bei größeren Drain-Source-Strömen von $M_6$ erhöht wird. Durch diese Erhöhung wird der Transistor $M_6$ weiter aufgesteuert und wirkt der Vergrößerung der Drain-Source-Spannung und damit dem Aufsteuern der Drain-Bulk-Diode von $M_6$ entgegen. Der Widerstand $R_1$ kann das Abbild des Stromes von $M_6$, der durch $M_2$ fließt, in seiner Höhe begrenzen.

Der Widerstand $R_3$ kann von Vorteil sein, indem er eine Filterwirkung zusammen mit dem Kondensator C, ausübt und indem er als Gegenkopplung dient, insbesondere dynamisch, falls der Anschluss $V_{SUP}$ schnell unter das Potential von $V_{ST1}$ gezogen wird. Der Widerstand $R_3$ hebt die Drain-Bulk-Spannung von $M_6$ an und verkleinert dadurch seine Schwellspannung (Back-Gate-Effekt). Bei gleichbleibender Drain-Gate-Spannung reduziert sich so die Drain-Source-Spannung. Dieser Vorteil kann von dem Spannungsabfall über $R_3$ kompensiert werden.

Die Transistoren $M_1$, $M_2$, $M_3$, $M_4$, $M_5$, $M_6$ und $M_7$ können als Hochvolt-Transistoren ausgeführt werden, sodass $V_{SUP}$ an Spannungen bis beispielsweise 40 V oder höher angeschlossen werden kann.

Bei der in Figur 1 gezeigten Schaltung hängt der Source-Drain-Strom eines PMOS-Transistors in schwacher Inversion (weak-inversion, sub-threshold region) exponentiell von der Source-Gate-Spannung ab, mit

$$I_{SD} = I_{SD0} \times (W/L) \times \exp[(V_{SG} - V_{th}) / (nkT/q)] \text{ (Source mit Bulk verbunden)},$$

wobei $I_{SD0}$ der Source-Drain-Strom ist, wenn die Source-Gate-Spannung gleich der Schwellspannung ist ($V_{SG} = V_{th}$). W ist die Weite und L ist die Länge des Transistors, n ($\approx$ 1.2 ... 1.5) ist eine Technologie-Konstante. Entsprechend kann der Source-Drain-Strom bei $V_{SG}$ - $V_{th}$ = 100 ... 200 mV um zwei Größenordnungen höher als bei $V_{SG}$ - $V_{th}$ = 0 liegen.

Bei mehreren 100 mV arbeitet der MOS-Transistor nicht mehr in schwacher, sondern in starker Inversion (strong-inversion) und der Source-Drain-Strom steigt nicht mehr exponentiell sondern nur noch quadratisch mit

$$I_{SD} = \frac{1}{2} \mu\, c_{ox} \times (W/L) \times (V_{SG} - V_{th})^2$$

an ($\mu$ ist die Beweglichkeit und $c_{ox}$ ist die Gate-Oxyd-Kapazität). Dennoch sind mit einem Referenzstrom im Bereich von einigen 10 nA bis einigen 100 nA und der hier vorgeschlagenen Schaltung je nach Dimensionierung Ströme von einigen 100 $\mu$A beziehungsweise einigen mA zur Versorgung des Sternpunktes möglich, wobei der Spannungsabfall zwischen der versorgenden Spannungsquelle und dem Sternpunkt dabei im Bereich von 100 bis 200 mV liegen kann. Dieser Versorgungsstrom ist in der Regel ausreichend, um einen im Standby-Mode befindlichen Verbraucher, beispielsweise ein ASIC, zu versorgen.

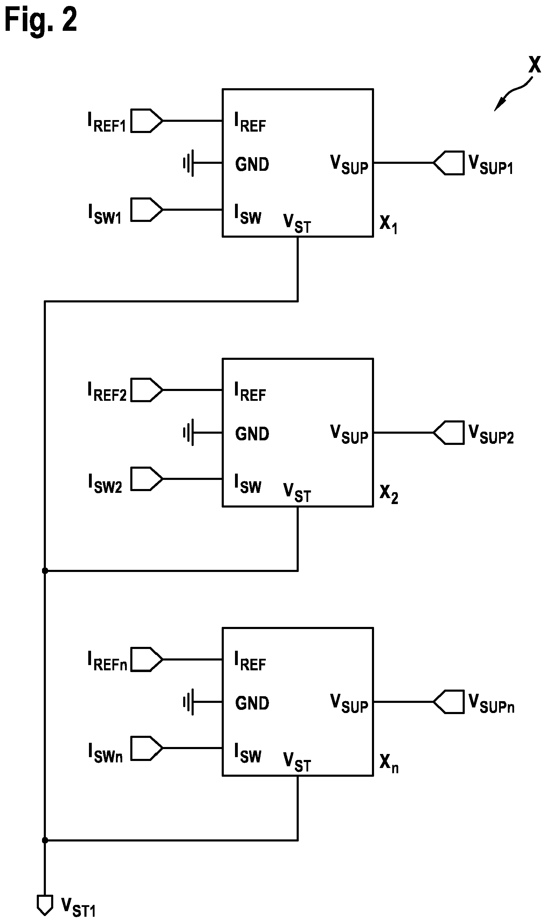

In Figur 2 ist ein Ausführungsbeispiel einer ersten übergeordneten Teilschaltung X für den Standby-Betrieb eines Verbrauchers gezeigt, bei welcher die verschiedenen Spannungsquellen $V_{SUP1}$, $V_{SUP2}$, $V_{supn}$ über PMOS-Transistoren auf einen gemeinsamen Sternpunkt $V_{ST1}$ geführt werden. Die PMOS-Transistoren werden nur soweit aufgesteuert, wie es zur Bereitstellung des benötigten Stromes erforderlich ist. Jeder PMOS-Transistor benötigt eine geeignete Ansteuerschaltung. Figur 2 zeigt demnach die Zusammenschaltung aus mehreren in Figur 1 gezeigten Schaltungen $X_1$, $X_2$, $X_n$ zu einem Verbund, sodass eine Versorgung des Sternpunktes $V_{ST1}$ aus verschiedenen Spannungsquellen $V_{SUP1}$, $V_{SUP2}$, $V_{supn}$ ermöglicht wird. Die Anzahl der Spannungsquellen ist prinzipiell beliebig.

Jede Spannungsquelle $V_{SUP1}$, $V_{SUP2}$, $V_{supn}$ kann vorzugsweise mithilfe eines Steuerstromes Isw über den entsprechenden Anschluss freigegeben oder gesperrt werden. Beliebig viele dieser Module $X_1$, $X_2$, $X_n$ können an den Sternpunkt $V_{ST1}$ angeschlossen werden und diesen versorgen. Der Sternpunkt $V_{ST1}$ kann bei geeigneter Dimensionierung und je nach entnommenem Strom ca. 100 mV bis 200 mV unterhalb der höchsten Spannungsquelle liegen, welche freigegeben ist.

Aus dem Sternpunkt $V_{ST1}$ kann sich beispielsweise ein Linearregler LDO versorgen, der eine geregelte erste Betriebsspannung für das ASIC im Standby-Betrieb zur Verfügung stellt. Wird der Sternpunkt $V_{ST1}$ auch aus einer Ladungspumpe oder einem DC-DC-Aufwärtswandler versorgt, so kann im ASIC eine Spannungsquelle zur Verfügung stehen, welche im Falle eines Spannungseinbruchs - beispielsweise bedingt durch die Fahrzeugbatterie eines Kraftfahrzeuges beim Startvorgang - hoch genug ist, um Gates von NMOS-Transistoren anzusteuern.

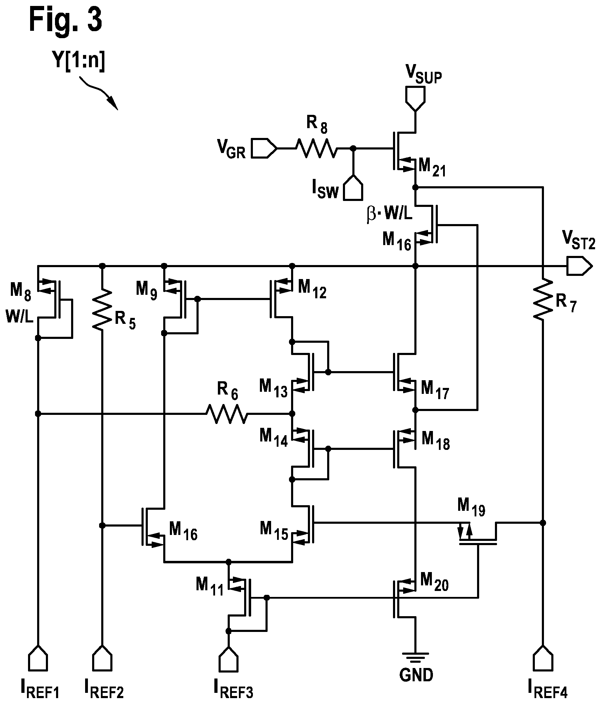

In Figur 3 ist ein Ausführungsbeispiel einer untergeordneten Teilschaltung $Y_1$, $Y_2$, $Y_n$ für eine zweite für den Normalbetrieb eines Verbrauchers vorgesehene übergeordnete Teilschaltung Y gezeigt. Im Normalbetrieb ist in der Regel ein größerer Versorgungsstrom als im Standby-Betrieb erforderlich, welcher im Bereich einiger 1 mA bis einiger 10 mA oder höher liegen kann. Die in den Figuren 1 und 2 gezeigten Schaltungen können zwar prinzipiell verwendet werden, haben jedoch die Eigenschaft, dass die Spannung am Sternpunkt einige 100 mV unterhalb der höchsten zur Verfügung stehenden Spannungsquelle liegt. Es kann daher hier die Notwendigkeit bestehen, Hochvolt-Transistoren zu verwenden, die bei dem Strombedarf im Normalbetrieb entsprechend groß sein können und große Transistor-Kapazitäten aufweisen können. Die Ansteuerung des Gates von $M_6$ in Figur 1 ist hochohmig. Große Transistor-Kapazitäten und sich schnell ändernde Eingangsspannungen können hier zu nicht optimalem dynamischen Verhalten führen.

Da in einem als Verbraucher agierenden ASIC in der Regel interne Betriebsspannungen von einigen wenigen Volt (beispielsweise 5 V, 3.3 V, 2.5 V oder 1.5 V) benötigt werden, müsste die Spannung $V_{ST2}$ des Sternpunktes mithilfe eines Spannungsreglers auf den Wert der erforderlichen internen Betriebsspannung geregelt werden. Bei einem Linearregler würden dadurch Verluste im ASIC entstehen. In Figur 3 wird daher eine Schaltung mit niederohmiger Gate-Ansteuerung und entsprechend gutem dynamischen Verhalten bei schnellen Spannungsänderungen der versorgenden Spannungsquellen gezeigt, bei der die Sternpunktspannung $V_{ST2}$ tiefer als die Spannung der versorgenden Spannungsquelle liegen kann, wodurch es ermöglicht wird, dass eine im Steuergerät verfügbare und der Spannung im Sternpunkt entsprechende Versorgungsspannung $V_{GR}$ von außen zugeführt wird, um die Verlustleistung im ASIC gering zu halten.

Dabei wird über den $I_{REF1}$-Anschluss ein Referenzstrom zugeführt, welcher im Bereich einiger 100 nA bis einiger 1 $\mu$A liegen kann. Der Transistor $M_8$ ist vorzugsweise so zu dimensionieren, dass seine Source-Gate-Spannung nahe der Schwellspannung eingestellt wird, sodass $M_8$ in schwacher Inversion (weak-inversion, sub-threshold region) betrieben wird.

Die Source-Gate-Spannung von $M_8$ wird über den Widerstand $R_6$ und eine aus den Transistoren $M_{13}$, $M_{14}$, $M_{17}$ und $M_{18}$ gebildete Push-Pull-Stufe an das Gate des Transistors $M_{16}$ geführt. Sofern keine Spannung über dem Widerstand $R_6$ abfällt und kein Strom durch $M_{16}$ fließt, entspricht seine Source-Gate-Spannung der von $M_8$. Der Transistor $M_{16}$ kann eine größere oder kleinere Weite als der Transistor $M_8$ haben, was durch den Koeffizienten $\beta$ dargestellt ist. Fließt nun ein Strom vom Anschluss $V_{sup}$ über die Transistoren $M_{21}$ und $M_{16}$ zum Anschluss $V_{ST2}$, so wird die Drain-Spannung von $M_{16}$ über die Spannung seines Source-Anschlusses gehoben, sodass Drain und Source ihre Funktion tauschen und der Transistor $M_{16}$ rückwärts betrieben wird. Durch die positive Drain-Source-Spannung von $M_{16}$ ergibt sich auch eine Drain-Gate-Spannung, die ausreichen kann, sodass $M_{16}$ einen Kanal bildet und den benötigten Strom bereitstellen kann.

Damit ein Strom über die Transistoren $M_{21}$ und $M_{16}$ fließen kann, ist es erforderlich, dass der Transistor $M_{21}$ aufgesteuert wird, indem seine Gate-Spannung durch Anlegen eines positiven Spannungswertes an den Anschluss $V_{GR}$ angehoben wird. Über den Anschluss $V_{GR}$ ist es möglich, den Sternpunkt $V_{ST2}$ auf einen bestimmten Spannungswert einzustellen. Soll der Sternpunkt $V_{ST2}$ aus mehreren Spannungsquellen $V_{SUP1}$, $V_{SUP2}$, $V_{supn}$ versorgt werden können, so können einzelne Spannungsquellen für die Versorgung des Sternpunktes $V_{ST2}$ gesperrt werden, indem über den entsprechenden Anschluss Isw ein Steuerstrom entnommen wird, sodass sich über dem Widerstand $R_8$ ein Spannungs-abfall ergibt, der die Source-Gate-Spannung von $M_{21}$ soweit herabsetzt, dass dieser sperrt. Der Transistor $M_{21}$ ist demnach nur erforderlich, wenn der Sternpunkt auf einen bestimmten Spannungswert eingestellt werden soll.

Darüber hinaus sind der Widerstand $R_8$ und der $I_{SW}$-Anschluss nur erforderlich, wenn die Versorgung des Sternpunktes $V_{ST2}$ aus dem Anschluss $V_{sup}$ abschaltbar ausgeführt werden soll. Falls der Sternpunkt $V_{ST2}$ permanent aus $V_{sup}$ versorgt werden darf, nicht auf einen bestimmten Spannungswert eingestellt werden muss, so kann der An-schluss $V_{sup}$ direkt mit dem Drain von $M_{16}$ verbunden werden und die Komponenten $M_{21}$, $R_8$ sowie der Anschluss Isw können entfallen.

Falls ein zu großer Strom über die Drain-Source-Strecke von $M_{16}$ fließt, so könnte die Drain-Source-Spannung am Transistor $M_{16}$ derart groß werden, dass seine Drain-Bulk-Diode aufgesteuert würde. Um dem entgegenzuwirken, wird die Drain-Gate-Spannung von $M_{16}$ mit steigendem Drain-Source-Strom ebenfalls erhöht. Im Gegensatz zur Schaltung in Figur 1 wird vorliegend nicht direkt der Drain-Source-Strom erfasst, sondern mithilfe eines aus den Transistoren $M_9$, $M_{10}$, $M_{12}$ und $M_{15}$ gebildeten Differenzverstärkers das Potential am Drain-Anschluss von $M_{16}$ mit dem Potential des Sternpunktes ($V_{ST2}$-Anschluss) verglichen. Diese beiden Potentiale werden mithilfe der stromdurchflossenen Wider-stände $R_5$ und $R_7$ nach unten verschoben und dem Differenzpaar $M_{10}$ und $M_{15}$ zugeführt. Die Ströme für die Widerstände $R_5$ und $R_7$ fließen über die Anschlüsse $I_{REF2}$ und $I_{REF4}$. Der Bias-Strom für den Differenzverstärker $M_9$, $M_{10}$, $M_{12}$, $M_{15}$ fließt über den Anschluss $I_{REF3}$.

Ist die Spannung am Drain-Anschluss von $M_{16}$ größer als die des Sternpunktes am $V_{ST2}$-Anschluss, so verur-sacht $M_{15}$ einen Spannungsabfall über dem Widerstand $R_6$ (gleichzeitig steigt auch die Source-Gate-Spannung von $M_8$ etwas) und das Gate von $M_{16}$ wird über die Push-Pull-Stufe nach unten gezogen (die Drain-Gate-Spannung von $M_{16}$ steigt) und wirkt so der Erhöhung der Drain-Source-Spannung von $M_{16}$ entgegen. Umgekehrt führt eine Spannung am Drain-Anschluss von $M_{16}$, die kleiner ist als die des Sternpunktes am $V_{ST2}$-Anschluss, dazu, dass das Gate von $M_{16}$ von $M_{12}$ nach oben gezogen wird (die Drain-Gate-Spannung von $M_{16}$ sinkt) und verringert so den Strom, der vom Sternpunkt ($V_{ST2}$-Anschluss) zurück zum $V_{SUP}$-Anschluss fließen kann, erheblich. Der Rückspeisestrom kann bei geeigneter Dimensionierung im Bereich einiger 10 nA bis einiger 100 nA liegen.

Aufgrund der Push-Pull-Stufe sind Umladungen des Gates von $M_{16}$ und damit verbunden Änderungen der Drain-Gate-Spannung von $M_{16}$ sehr schnell möglich, wodurch die vorgeschlagene Schaltung bei sehr schnellen Spannungsänderungen der versorgenden Quelle bei geeigneter Dimensionierung sehr gute dynamische Eigenschaften aufweisen kann. Dennoch ist auch ein Betrieb ohne Push-Pull-Stufe möglich. Dann würden die Transistoren $M_{13}$, $M_{14}$, $M_{17}$ und $M_{18}$ entfallen und der Widerstand $R_6$ und das Gate von $M_{16}$ würden mit den Drain-Anschlüssen der Transistoren $M_{12}$ und $M_{15}$ verbunden werden.

Der Transistor $M_{19}$ schützt den Transistor $M_{15}$ vor negativer Gate-Source-Spannung, denn durch das von $M_{11}$ vorgegebene Potential am Gate von $M_{19}$ kann das Source-Potential von $M_{19}$ nicht tiefer als das von $M_{11}$ und $M_{15}$ liegen. Die Transistoren $M_{11}$, $M_{20}$ und $M_{19}$ können als Hochvolt-Transistoren ausgeführt werden. Dann können die Transistoren $M_8$, $M_9$, $M_{10}$, $M_{12}$, $M_{13}$, $M_{14}$, $M_{15}$, $M_{17}$ und $M_{18}$ als Standard-Transistoren ausgeführt werden, unabhängig von einer möglichen hohen Spannung des Sternpunktes $V_{ST2}$. Der Transistor $M_{21}$ kann als Hochvolt-Transistor ausgeführt werden, sodass $V_{SUP}$ an Spannungen bis beispielsweise 40 V oder höher angeschlossen werden kann. Auch der Transistor $M_{16}$ kann je nach Vorhandensein von $M_{21}$ und Wahl der Sternpunkt-Spannung $V_{ST2}$ als Hochvolt-Transistor ausgeführt werden. Es ist bei geeigneter Wahl der Sternpunkt-Spannung $V_{ST2}$ unter Berücksichtigung der verwendeten Halbleiter-Technologie und dessen höchster Gate-Oxyd-Spannung bei Standard-Transistoren jedoch möglich, alle Transistoren bis auf $M_{21}$ als Standard-Transistoren auszuführen, um in erster Linie Chip-Fläche einzusparen. Der Transistor $M_{20}$ kann in diesem Fall entfallen und der Drain-Anschluss von $M_{18}$ wird direkt mit der Masse GND verbunden.

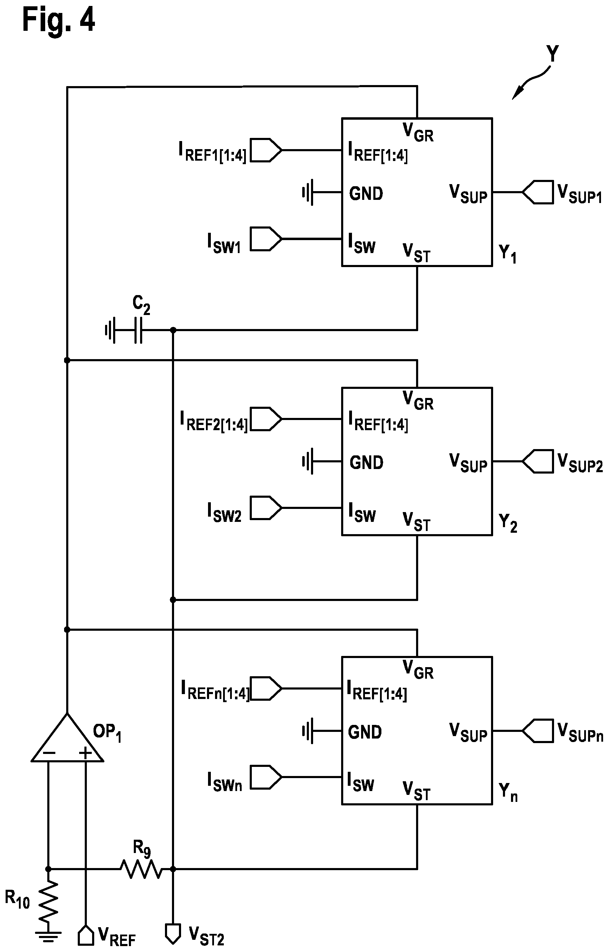

In Figur 4 ist ein Ausführungsbeispiel einer zweiten übergeordneten Teilschaltung Y für den Normalbetrieb eines Verbrauchers gezeigt, in welchem mehrere in Figur 3 gezeigte Schaltungen $Y_1$, $Y_2$, $Y_n$ zu einem Verbund zusammengeschaltet sind, sodass eine Versorgung des Sternpunktes $V_{ST2}$ aus verschiedenen Spannungsquellen $V_{SUP1}$, $V_{SUP2}$, $V_{supn}$ ermöglicht wird. Für jede Spannungsquelle $V_{SUP1}$, $V_{SUP2}$, $V_{SUPn}$ ist eine eigene Schaltung $Y_1$, $Y_2$, $Y_n$ nach Figur 3 erforderlich, wobei einzelne Spannungsquellen $V_{SUP1}$, $V_{SUP2}$, $V_{supn}$ vorteilhafterweise mithilfe von Steuerströmen Isw über den entsprechenden Isw-Anschluss freigegeben oder gesperrt werden können. Beliebig viele dieser Module $Y_1$, $Y_2$, $Y_n$ können an den Sternpunkt $V_{ST2}$ angeschlossen werden und diesen versorgen. Der Sternpunkt $V_{ST2}$ kann mithilfe eines Operationsverstärkers $OP_1$, des Spannungsteilers, bestehend aus $R_9$ und $R_{10}$ und einer über den $V_{REF}$-Anschluss zur Verfügung gestellten Referenzspannung auf einen bestimmten Wert (beispielsweise 5 V, 3.3 V, 2.5V oder 1.5 V) geregelt werden.

Der Kondensator $C_2$ dient vorliegend als Stützkondensator. Er kann entweder im pF-Bereich in einem als Verbraucher fungierenden ASIC oder im nF beziehungsweise μF-Bereich außerhalb eines als Verbraucher fungierenden ASIC an den Sternpunkt $V_{ST2}$ angeschlossen werden, sofern der Sternpunkt $V_{ST2}$ über einen separaten Anschluss des als Verbraucher fungierenden ASIC zur Verfügung steht.

Aus dem Sternpunkt $V_{ST2}$ können sich beispielsweise analoge Module des ASIC bedienen und es können mithilfe von Linearreglern LDO weitere Versorgungsspannungen (zum Beispiel zur Versorgung eines Digitalteils) abgeleitet werden.

Es gilt zu beachten, dass die zugrundeliegenden Ideen beider Teilschaltungen $X_1$, $X_2$, $X_n$, $Y_1$, $Y_2$, $Y_n$ aus Figur 1 und Figur 3 miteinander kombinierbar und untereinander austauschbar sind. So könnte der PMOS-Transistor $M_6$ in Figur 1 auch gegen einen NMOS-Transistor ausgetauscht werden. In diesem Fall könnte auch dort die Spannung des Sternpunktes $V_{ST1}$ eingestellt werden. Um jedoch möglichst nahe an die Spannung der höchsten zur Verfügung stehenden versorgenden Spannungsquelle zu gelangen, wird für die Teilschaltung $X_1$, $X_2$, $X_n$ im Standby-Betrieb ein PMOS-Transistor vorgeschlagen. Entsprechend könnte der NMOS-Transistor $M_{21}$ der Teilschaltung $Y_1$, $Y_2$, $Y_n$ in Figur 3 durch einen PMOS-Transistor ersetzt werden.

Da im Normalbetrieb oft die Spannung aus einer Ladungspumpe oder einem DC-DC-Aufwärtswandler zur Verfügung steht, um das Gate des NMOS-Transistors auch bei geringer Spannung der Fahrzeugbatterie anzusteuern, können dort mithilfe des NMOS-Transistors die Vorteile der einstellbaren Spannung des Sternpunktes ausgenutzt werden.

Auch in der Teilschaltung aus Figur 1 zur Versorgung im Standby-Betrieb wäre der Einsatz einer Push-Pull-Stufe zur Ansteuerung des Gates von $M_6$ mit den oben genannten Vorteilen möglich. Im Standby-Betrieb steht oft aber eine geringe Stromaufnahme im Fokus, sodass in der gemäß der Ausführungsform vorgeschlagenen Teilschaltung $Y_1$, $Y_2$, $Y_n$ nach Figur 3 darauf verzichtet wurde.

Prinzipiell kann auch die Stromerfassung der Teilschaltung $X_1$, $X_2$, $X_n$ in Figur 1 für die Gate-Ansteuerung im Normal-Betrieb verwendet werden und es kann umgekehrt die Spannungserfassung der Teilschaltung $Y_1$, $Y_2$, $Y_n$ in Figur 3 für die Gate-Ansteuerung im Standby-Betrieb herangezogen werden.

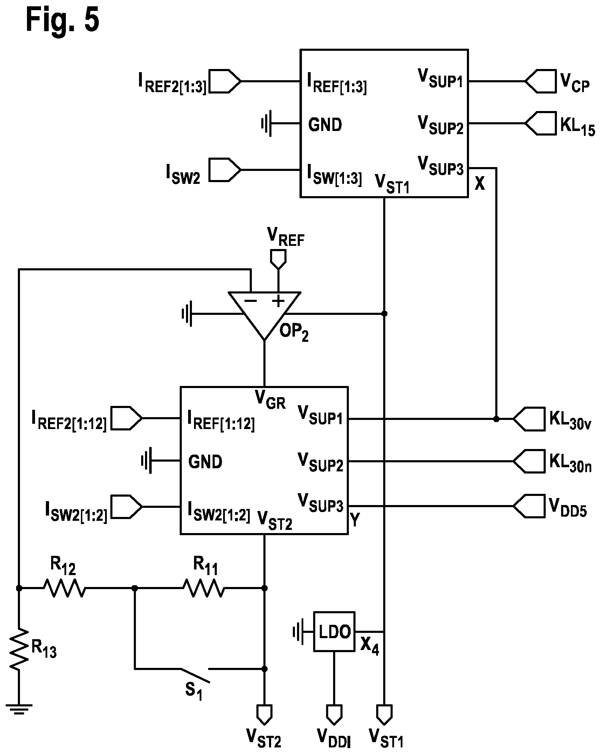

In Figur 5 ist ein Ausführungsbeispiel einer elektrischen Schaltung zur Versorgung eines Verbrauchers aus verschiedenen Spannungsquellen mit einer ersten Teilschaltung X für den Standby-Betrieb und einer zweiten Teilschaltung Y für den Normalbetrieb eines Verbrauchers gezeigt, wobei die Teilschaltung X dem Schaltungsverbund aus Figur 2 und die Teilschaltung Y dem Schaltungsverbund aus Figur 4 entspricht.

Das Modul X kann sich im Standby-Betrieb beispielsweise aus Klemme $KL_{15}$ und Klemme $KL_{30v}$ vor dem Hauptrelais eines Kraftfahrzeugs versorgen. Ist im Normalbetrieb ein Ladungspumpe aktiv, so kann sich das Modul X im Normal-Betrieb über den Anschluss $V_{CP}$ auch aus dieser versorgen und so eine Spannung an seinem Anschluss $V_{ST1}$ bereitstellen, die höher als beispielsweise die Spannung einer Fahrzeugbatterie sein kann. Der Operationsverstärker $OP_2$ wird von dem Sternpunkt $V_{ST1}$ des Moduls X versorgt, sodass die NMOS-Transistoren innerhalb des Moduls Y auch bei niedriger Spannung der Fahrzeugbatterie aufgesteuert werden können. Die einzelnen Spannungsquellen können über die Steuerströme $I_{SW1}$, $I_{SW2}$ und Iswa freigegeben beziehungsweise gesperrt werden. Aus dem Sternpunkt $V_{ST1}$ vom Modul X kann sich beispielsweise ein Linearregler LDO versorgen, der eine geregelte erste Betriebsspannung $V_{DDI}$ für das ASIC im Standby-Betrieb zur Verfügung stellt.

Das Modul Y ist nur im Normal-Betrieb aktiv. Es kann sich aus Klemme $KL_{30v}$, $KL_{30n}$ - vor und nach dem Hauptrelais - und aus einer im Steuergerät eines Kraftfahrzeugs befindlichen 5 V-Spannungsquelle $V_{DD5}$ versorgen, sobald diese nach dem Hochlauf des Steuergerätes zur Verfügung steht. Diese Spannungsquelle wird im Modul Y nicht über einen NMOS-Transistor (entsprechend $M_{21}$ in Figur 3) geführt, sondern nur über einem PMOS-Transistor (entsprechend $M_{16}$ in Figur 3) vom Eingang $V_{SUP3}$ direkt auf den Sternpunkt $V_{ST2}$ geführt (entsprechend ist für $V_{SUP3}$ kein $I_{SW3}$-Eingang am Modul Y vorgesehen).

Die 5 V-Spannungsquelle kann so die Spannung des Sternpunktes $V_{ST2}$ bestimmen. Dazu wird der Schalter $S_1$ geschlossen, sodass der Operationsverstärker $OP_2$ den Sternpunkt $V_{ST2}$ auf eine Spannung zu regeln versucht, die kleiner als die der 5 V-Spannungsquelle ist. Das führt dazu, dass die Gates der NMOS-Transistoren des Moduls Y (entsprechend $M_{21}$ in Figur 3) nach unten gezogen werden, sodass diese Transistoren sperren und eine Versorgung

aus Klemme $KL_{30v}$, $KL_{30n}$ (vor und nach dem Hauptrelais) über die Anschlüsse $V_{SUP1}$ und $V_{SUP2}$ zur Reduktion der Verlustleistung in einem als Verbraucher fungierenden ASIC unterbunden werden kann.

Steht die 5V-Spannungsquelle nicht zur Verfügung, kann sich das Modul Y aus Klemme $KL_{30v}$, $KL_{30n}$ (vor und nach dem Hauptrelais) versorgen. Eine Auswahl kann dabei über die Anschlüsse $I_{SW1}$ und $I_{SW2}$ von Y getroffen werden, indem über einen der beiden Anschlüsse ein Steuerstrom entnommen wird.

**Patentansprüche**

1. Elektrische Schaltung zur Versorgung eines Verbrauchers aus verschiedenen Spannungsquellen ($V_{SUP1}$, $V_{SUP2}$, ... $V_{SUPn}$) mit einer ersten übergeordneten Teilschaltung (X) für den Standby-Betrieb des Verbrauchers, welche für jede der Spannungsquellen ($V_{SUP1}$, $V_{SUP2}$, ... $V_{SUPn}$) untergeordnete Teilschaltungen ($X_1$, $X_2$, ... $X_n$) umfasst, die zur Versorgung eines eine erste Ausgangsspannung bereitstellenden ersten Sternpunktes ($V_{ST1}$) aus den verschiedenen Spannungsquellen ($V_{SUP1}$, $V_{SUP2}$, ... $V_{SUPn}$) in diesem miteinander verbunden sind, und

   einer zweiten übergeordneten Teilschaltung (Y) für den Normalbetrieb des Verbrauchers, welche für jede der Spannungsquellen ($V_{SUP1}$, $V_{SUP2}$, ... $V_{SUPn}$) untergeordnete Teilschaltungen ($Y_1$, $Y_2$, ... $Y_n$) umfasst, die zur Versorgung eines eine zweite Ausgangsspannung bereitstellenden zweiten Sternpunktes ($V_{ST2}$) aus den verschiedenen Spannungsquellen ($V_{SUP1}$, $V_{SUP2}$, ... $V_{SUPn}$) in diesem miteinander verbunden sind, **dadurch gekennzeichnet, dass**
   in den untergeordneten Teilschaltungen ($X_1$, $X_2$, ...$X_n$ bzw. $Y_1$, $Y_2$, ...$Y_n$) rückwärts betreibbare PMOS-Transistoren die an die untergeordneten Teilschaltungen angeschlossenen Spannungsquellen ($V_{SUP1}$, $V_{SUP2}$, ...$V_{SUPn}$) mit den Sternpunkten ($V_{ST1}$ bzw. $V_{ST2}$) verbinden.

2. Elektrische Schaltung nach Anspruch 1, wobei der erste Sternpunkt ($V_{ST1}$) als Versorgungsspannung eines Operationsverstärkers dient, dessen Ausgang eine Steuerspannung ($V_{GR}$) zur Verfügung stellt, mit deren Hilfe es möglich ist, den zweiten Sternpunkt ($V_{ST2}$) auf einen bestimmten Spannungswert zu regeln beziehungsweise einzustellen.

3. Elektrische Schaltung nach einem der Ansprüche 1 bis 2, wobei eine Erfassung des Stroms durch die die Spannungsquellen ($V_{SUP1}$, $V_{SUP2}$, ... $V_{SUPn}$) mit den Sternpunkten ($V_{ST1}$ beziehungsweise $V_{ST2}$) verbindenden PMOS-Transistoren erfolgt.

4. Elektrische Schaltung nach Anspruch 3, die bei einem entsprechenden Stromfluss durch einen der PMOS-Transistoren die Drain-Gate-Spannung des rückwärts betriebenen PMOS-Transistors (beziehungsweise die Source-Gate-Spannung des PMOS-Transistors) so einstellt, dass sich über einen gewissen Drain-Source-Strombereich des PMOS-Transistors nur ein geringer Spannungsabfall über der Drain-Source-Strecke des PMOS-Transistors ergibt.

5. Elektrische Schaltung nach einem der Ansprüche 1 bis 4, wobei eine Erfassung des Spannungsabfalls über der Drain-Source-Strecke der die Spannungsquellen ($V_{SUP1}$, $V_{SUP2}$, ... $V_{SUPn}$), mit den Sternpunkten ($V_{ST1}$ beziehungsweise $V_{ST2}$) verbindenden PMOS-Transistoren erfolgt.

6. Elektrische Schaltung nach einem der Anspruch 5, die bei einem entsprechenden Spannungsabfall über der Drain-Source-Strecke eines der PMOS-Transistoren die Drain-Gate-Spannung des rückwärts betriebenen PMOS-Transistors (beziehungsweise die Source-Gate-Spannung des PMOS-Transistors) so einstellt, dass sich über einen gewissen Drain-Source-Strombereich des PMOS-Transistors nur ein geringer Spannungsabfall über der Drain-Source-Strecke des PMOS-Transistors ergibt..

7. Elektrische Schaltung nach einem der Ansprüche 1 bis 6, bei der über Steuerströme ($I_{SW1}$, $I_{SW2}$, ...$I_{SWn}$) einzelne Spannungsquellen ($V_{SUP1}$, $V_{SUP2}$, ...$V_{SUPn}$) für die Versorgung der Sternpunkte ($V_{ST1}$ beziehungsweise $V_{ST2}$) freigegeben beziehungsweise gesperrt werden können.

**Claims**

1. Electrical circuit for supplying power to a load from different voltage sources ($V_{SUP1}$, $V_{SUP2}$, ... $V_{SUPn}$), comprising

   a first superordinate subcircuit (X), for standby operation of the load, which comprises subordinate subcircuits ($X_1$, $X_2$, ... $X_n$) for each of the voltage sources ($V_{SUP1}$, $V_{SUP2}$, ... $V_{SUPn}$), which subcircuits, in order to supply power to a first star point ($V_{ST1}$), which provides a first output voltage, from the different voltage sources ($V_{SUP1}$, $V_{SUP2}$, ... $V_{SUPn}$), are connected to one another at said star point, and

a second superordinate subcircuit (Y) for normal operation of the load, which comprises subordinate subcircuits ($Y_2$, $Y_2$, ... $Y_n$) for each of the voltage sources ($V_{SUP1}$, $V_{SUP2}$, ... $V_{SUPn}$), which subcircuits, in order to supply power to a second star point ($V_{ST2}$), which provides a second output voltage, from the different voltage sources ($V_{SUP1}$, $V_{SUP2}$, ... $V_{SUPn}$), are connected to one another at said star point,

**characterized in that**,

in the subordinate subcircuits ($X_1$, $X_2$, ... $X_n$ or $Y_1$, $Y_2$, ... $Y_n$), PMOS transistors that are able to be operated in reverse mode connect the voltage sources ($V_{SUP1}$, $V_{SUP2}$, ... $V_{SUPn}$) connected to the subordinate subcircuits to the star points ($V_{ST1}$ or $V_{ST2}$) .

2. Electrical circuit according to Claim 1, wherein the first star point ($V_{ST2}$) is used as supply voltage for an operational amplifier, the output of which provides a control voltage ($V_{GR}$), with the aid of which it is possible to regulate or to adjust the second star point ($V_{ST2}$) to a particular voltage value.

3. Electrical circuit according to either of Claims 1 and 2, wherein the current through the PMOS transistors connecting the voltage sources ($V_{SUP1}$, $V_{SUP2}$, ... $V_{SUPn}$) to the star points ($V_{ST1}$ or $V_{ST2}$) is detected.

4. Electrical circuit according to Claim 3, which, when there is a corresponding current flow through one of the PMOS transistors, adjusts the drain-gate voltage of the PMOS transistor operated in reverse mode (or the source-gate voltage of the PMOS transistor) such that only a small voltage drop across the drain-source path of the PMOS transistor results over a certain drain-source current region of the PMOS transistor.

5. Electrical circuit according to one of Claims 1 to 4, wherein the voltage drop across the drain-source path of the PMOS transistors connecting the voltage sources ($V_{SUP1}$, $V_{SUP2}$, ... $V_{SUPn}$) to the star points ($V_{ST1}$ or $V_{ST2}$) is detected.

6. Electrical circuit according to Claim 5, which, when there is a corresponding voltage drop across the drain-source path of one of the PMOS transistors, adjusts the drain-gate voltage of the PMOS transistor operated in reverse mode (or the source-gate voltage of the PMOS transistor) such that only a small voltage drop across the drain-source path of the PMOS transistor results over a certain drain-source current region of the PMOS transistor.

7. Electrical circuit according to one of Claims 1 to 6, in which individual voltage sources ($V_{SUP1}$, $V_{SUP2}$, ... $V_{SUPn}$) for supplying power to the star points ($V_{ST1}$ or $V_{ST2}$) can be enabled or blocked via control currents ($I_{SW1}$, $I_{SW2}$, ... $I_{SWn}$).

**Revendications**

1. Circuit électrique permettant d'alimenter un consommateur à partir de différentes sources de tension ($V_{SUP1}$, $V_{SUP2}$, ... $V_{SUPn}$), comprenant un premier circuit partiel supérieur (X) pour le fonctionnement en mode veille du consommateur et qui comprend pour chacune des sources de tension ($V_{SUP1}$, $V_{SUP2}$, $V_{SUPn}$) des circuits partiels inférieurs ($X_1$, $X_2$, ... $X_n$) qui, pour l'alimentation d'un premier point neutre ($V_{ST1}$) fournissant une première tension de sortie, à partir des différentes sources de tension ($V_{SUP1}$, $V_{SUP2}$, ... $V_{SUPn}$) sont reliés les uns aux autres au niveau dudit point, et comprenant un deuxième circuit partiel supérieur (Y) pour le fonctionnement en mode normal du consommateur qui comprend pour chacune des sources de tension ($V_{SUP1}$, $V_{SUP2}$, $V_{SUPn}$) des circuits partiels inférieurs ($Y_2$, $Y_2$, ... $Y_n$) qui, pour l'alimentation d'un deuxième point neutre ($V_{ST2}$) fournissant une deuxième tension de sortie, à partir des différentes sources de tension ($V_{SUP1}$, $V_{SUP2}$, ... $V_{SUPn}$) sont reliés les uns aux autres au niveau dudit point,

**caractérisé en ce que** dans les circuits partiels inférieurs ($X_1$, $X_2$, ... $X_n$ ou $Y_1$, $Y_2$, ... $Y_n$), des transistors PMOS pouvant fonctionner en sens inverse relient aux points neutres ($V_{ST1}$ ou $V_{ST2}$) les sources de tension ($V_{SUP1}$, $V_{SUP2}$, $V_{SUPn}$) connectées aux circuits partiels inférieurs.

2. Circuit électrique selon la revendication 1, dans lequel le premier point neutre ($V_{ST1}$) sert de tension d'alimentation pour un amplificateur opérationnel dont la sortie fournit une tension de commande ($V_{GR}$) qui permet de réguler ou de régler le deuxième point neutre ($V_{ST2}$) sur une valeur de tension déterminée.

3. Circuit électrique selon l'une quelconque des revendications 1 à 2, dans lequel une détection du courant est effectuée par les transistors PMOS reliant les sources de tension ($V_{SUP1}$, $V_{SUP2}$, ... $V_{SUPn}$) aux points neutres ($V_{ST1}$ ou $V_{ST2}$) .

**4.** Circuit électrique selon la revendication 3, qui, pour un flux de courant respectif à travers l'un des transistors PMOS, règle la tension drain-grille du transistor PMOS fonctionnant en sens inverse (ou la tension source-grille du transistor PMOS, respectivement) de telle sorte que sur une certaine plage de courant drain-source du transistor PMOS, seule une faible chute de tension résulte sur le trajet drain-source du transistor PMOS.

**5.** Circuit électrique selon l'une quelconque des revendications 1 à 4, dans lequel une détection de la chute de tension sur le trajet drain-source des transistors PMOS reliant les sources de tension ($V_{SUP1}$, $V_{SUP2}$, ... $V_{SUPn}$) aux points neutres ($V_{ST1}$ ou $V_{ST2}$, respectivement) est effectuée.

**6.** Circuit électrique selon la revendication 5, qui, en cas de chute de tension respective sur le trajet drain-source d'un des transistors PMOS, règle la tension drain-grille du transistor PMOS fonctionnant en sens inverse (ou la tension source-grille du transistor PMOS, respectivement) de telle sorte que sur une certaine plage de courant drain-source du transistor PMOS, seule une faible chute de tension résulte sur le trajet drain-source du transistor PMOS.

**7.** Circuit électrique selon l'une quelconque des revendications 1 à 6, dans lequel des courants de commande ($I_{SW1}$, $I_{SW2}$, ... $I_{SWn}$) permettent de débloquer ou de bloquer respectivement des sources de tension ($V_{SUP1}$, $V_{SUP2}$, $V_{SUPn}$) individuelles pour alimenter les points neutres ($V_{ST1}$ ou $V_{ST2}$ respectivement) .

Fig. 1

EP 3 741 020 B1

# Fig. 2

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2180392 A1
- EP 1128536 A2
- US 20100097044 A1
- US 20140139029 A1
- DE 102014203968 A1
- DE 19651612 A1